# EUROPEAN PATENT SPECIFICATION

(11) **EP 4 071 909 B1**
(45) Date of publication and mention of the grant of the patent: **28.10.2026**
(21) Application number: 21872836.8
(22) Date of filing: 16.09.2021
(51) Int. Cl.: H01M 50/30, H01M 50/317, H01M 10/04, H01M 50/116, B65B 31/04, B65B 31/08

(54) **GAS REMOVING DEVICE AND METHOD OF SECONDARY BATTERY**
VORRICHTUNG UND VERFAHREN ZUR GASABFÜHRUNG FÜR SEKUNDÄRBATTERIEN
APPAREIL D'ÉLIMINATION DE GAZ ET PROCÉDÉ D'ÉLIMINATION DE GAZ POUR BATTERIE SECONDAIRE

(30) Priority: 25.09.2020 KR 20200125156
(43) Date of publication of application: 12.10.2022
(73) Proprietor: LG Energy Solution, Ltd., Seoul 07335 (KR)
(72) Inventor: KIM, Sang Jih, Daejeon 34122 (KR); BAE, Joon Sung, Daejeon 34122 (KR); LEE, Eui Kyung, Daejeon 34122 (KR); HONG, Suk Hyun, Daejeon 34122 (KR); LEE, Beom Koon, Daejeon 34122 (KR); BAE, Dong Hun, Daejeon 34122 (KR)
(74) Representative: Plasseraud IP
(86) International application number: PCT/KR2021/012721
(87) International publication number: WO 2022/065808

(56) References cited:
- WO-A1-2020/145490
- CN-A- 108 808 141
- CN-U- 205 452 450
- KR-A- 20190 055 585
- KR-A- 20190 074 591
- KR-A- 20200 026 064
- KR-B1- 102 124 201
- US-A1- 2015 270 530

## Description

### TECHNICAL FIELD

The present invention relates to a gas removing device and method of a secondary battery, and more particularly, to a gas removing device and method of a secondary battery, in which a process of removing a gas generated in a pouch and a process of sealing a hole through which the gas is discharged are performed at the same time.

### BACKGROUND ART

In general, secondary batteries refer to chargeable and dischargeable batteries, unlike primary batteries that are not chargeable. Such a secondary battery is being widely used in the high-tech electronic fields such as mobile phones, notebook computers, and camcorders.

The secondary batteries are classified into a can type secondary battery, in which an electrode assembly is embedded in a metal can, and a pouch type secondary battery in which an electrode assembly is embedded in a pouch. Also, the pouch type secondary battery comprises an electrode assembly, an electrode lead coupled to an electrode tab of the electrode assembly, and a pouch accommodating the electrode assembly in a state in which a front end of the electrode lead is drawn out.

In the secondary battery, an activation process of charging and discharging the secondary battery to improve battery performance, a degassing process of discharging a gas generated inside the secondary battery during the activation process, a sealing process of sealing a gas discharge hole of the secondary battery are performed.

However, since the secondary battery according to the related art performs the degassing process and the sealing process in separate devices, there is a problem in that work efficiency is deteriorated.

Examples of background art can be found in WO2020/145490A1, KR102124201B1 and CN108808141A.

### DISCLOSURE OF THE INVENTION

### TECHNICAL PROBLEM

In a gas removing device and method of a secondary battery according to the present invention for solving the above problems, a gas generated in the secondary battery is discharged, and continuously, a hole, through which the gas is discharged, is sealed to improve work efficiency.

### TECHNICAL SOLUTION

A gas removing device, which removes a gas generated inside a pouch, in which an electrode assembly is accommodated, according to the present invention for achieving the above object as defined in the independent claim 1 comprises: a pair of vacuum tubes configured to press each of both surfaces of the pouch in a state of being symmetrically disposed both the surfaces of the pouch so as to form a vacuum surface, which is in a vacuum state, on the pouch; a heating member provided on a pressing surface of each of the vacuum tubes, which presses the pouch, and configured to seal only a portion of an edge of the vacuum surface so as to form a sealed part and an unsealed part; a cutting member configured to cut the vacuum surface of the pouch so as to form a cutoff hole; and a gas discharging member configured to discharge a gas inside the pouch to the outside through the unsealed part, the cutoff hole, and the vacuum tubes.

Two or more heating members are provided on the pressing surface of each one of the pair of vacuum tubes to form two or more sealed parts and two or more unsealed parts on the edge of the vacuum surface. An insulator configured to block heat of the heating member so as not to be transferred to the unsealed part is provided on the pressing surface of the vacuum tube disposed between the heating members.

An arc angle formed by combining the two or more heating members may be 180° or more based a central point of the vacuum tube.

Two heating members may be symmetrically provided on the pressing surface based on a central point of the vacuum tube, and each of the two heating member may have an arc angle of 90° or more based on the central point of the vacuum tube.

An insulator configured to block heat of the heating member so as not to be transferred to the unsealed part is provided on the pressing surface of the vacuum tube disposed between the heating members.

An insertion groove into which the heating member and the insulator are inserted and fixed may be formed in the pressing surface of the vacuum tube.

The pressing surface of the vacuum tube may have a ring shape, the insertion groove may be formed along the pressing surface so that each of both ends of the insertion groove has a right shape, and the heating member and the insulator may be inserted to be alternately disposed in the insertion groove having the ring shape.

The heating member and the insulator may be detachably inserted into the insertion groove.

The gas removing device may further comprise a rotating member configured to rotate the pair of vacuum tubes so that the heating member provided in each of the pair of vacuum tubes is disposed on the unsealed part.

The heating member disposed on the unsealed part may be provided to seal the unsealed part so as to seal the cutoff hole.

A gas removing method of a secondary battery, in which a gas generated inside a pouch, in which an electrode assembly is accommodated, is removed, according to the present invention as defined in the independent claim 9 comprises, in the following order: a process (a) of pressing each of both surfaces of a pouch by a pair of vacuum tubes in a state of being symmetrically disposed on both the surfaces of the pouch to form a vacuum surface, which is in a vacuum state, on a surface of the pouch; a process (b) of sealing only a portion of an edge of the vacuum surface through a heating member provided on the pressing surface of each vacuum tube that presses the pouch to form a sealed part and an unsealed part; a process (c) of cutting the vacuum surface of the pouch by using a cutting member to form a cutoff hole; and a process (d) of discharging a gas inside the pouch through a gas discharging member to the outside through the unsealed part, the cutoff hole, and the vacuum tubes. An insulator configured to block heat of the heating member so as not to be transferred to the unsealed part is provided on the pressing surface of each vacuum tube disposed between the heating members.

In the process (b), two or more heating members are provided to form two or more sealed parts and two or more unsealed parts on the edge of the vacuum surface.

In the process (b), an arc angle formed by combining the two or more heating members may be 180° or more based a central point of the vacuum tubes to form a sealed part having a combined arc angle of 180° or more on the edge of the vacuum surface.

The gas removing method may further comprise, after the process (d), a process (e) of rotating the vacuum tubes through a rotating member so that the heating member provided on each vacuum tube is disposed on the unsealed part; and a process (f) of sealing the unsealed part through the heating member to seal the cutoff hole.

In the process (e), both ends of the heating member disposed on the unsealed part may be disposed to partially overlap the sealed part disposed on each of both sides of the unsealed part.

### ADVANTAGEOUS EFFECTS

The gas removing device of the secondary battery may comprise the pair of vacuum tubes, the heating member, the cutting member, the gas discharging member, and the rotating member. Due to these characteristics, it is possible to simultaneously performing the discharging of the gas generated inside the secondary battery and the sealing of the discharging hole, through which the gas is discharged, and as a result, the work efficiency and the process simplification may be improved.

### BRIEF DESCRIPTION OF THE DRAWINGS

FIG. 1 is a side view illustrating a gas removing device of a secondary battery according to a first embodiment of the present invention.
FIG. 2 is a perspective view illustrating the gas removing device of the secondary battery according to the first embodiment of the present invention.
FIG. 3 is a front view illustrating one vacuum tube in the gas removing device of the secondary battery according to the first embodiment of the present invention.
FIG. 4 is a front view illustrating the other vacuum tube in the gas removing device of the secondary battery according to the first embodiment of the present invention.
FIG. 5 is a cross-sectional view illustrating the gas removing device of the secondary battery according to the first embodiment of the present invention.
FIG. 6 is a front view illustrating a state in which a sealed part and an unsealed part are formed on an edge of a vacuum surface through the gas removing device of a secondary battery according to the first embodiment of the present invention.
FIG. 7 is a front view illustrating a state in which the entire edge of the vacuum surface of the secondary battery is sealed through the gas removing device of a secondary battery according to the first embodiment of the present invention.
FIG. 8 is a flowchart illustrating a gas removing method of the secondary battery according to the first embodiment.
FIG. 9 is a cross-sectional view illustrating a process (a) in the gas removing method of the secondary battery according to the first embodiment.
FIG. 10 is a front view illustrating a process (b) in the gas removing method of the secondary battery according to the first embodiment.
FIG. 11 is a front view illustrating a process (c) in the gas removing method of the secondary battery according to the first embodiment.
FIG. 12 is a cross-sectional view illustrating a process (d) in the gas removing method of the secondary battery according to the first embodiment.
FIG. 13 is a front view illustrating a process (c) and a process (f) in the gas removing method of the secondary battery according to the first embodiment.
FIG. 14 is a front view illustrating a gas removing device of a secondary battery according to a second embodiment of the present invention.
FIG. 15 is a cross-sectional view taken along line A-A of FIG. 14.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery]

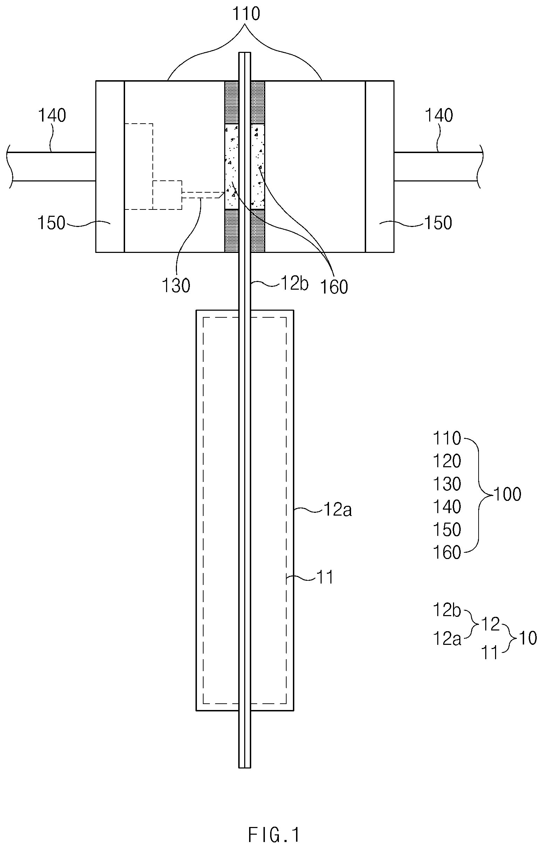

Referring to FIG. 1, a secondary battery 10 comprises an electrode assembly 11 having a structure, in which electrodes and separators are alternately stacked, a pouch 12 accommodating the electrode assembly 11, and an electrolyte (not shown) injected into the pouch 12 to be impregnated into the electrode assembly 11. The pouch 12 comprises an accommodation part 12a, in which the electrode assembly 11 and the electrolyte are accommodated, and a gas pocket part 12b collecting a gas generated in the accommodation part 12a.

In the secondary battery 10 having such a configuration, an activation process for improving battery performance is performed. Here, a gas is generated due to an interaction between the electrode assembly and the electrolyte, and the gas is collected in the gas pocket part 12b through the accommodating part 12a.

As described above, the gas collected in the gas pocket part 12b may be discharged to the outside through the gas removing device 100 of the secondary battery according to the first embodiment of the present invention. Particularly, the gas removing device 100 of the secondary battery according to the first embodiment of the present invention may seal a cutoff hole that is cut in order to discharge the gas collected in the gas pocket part 12b, and accordingly, the process may be simplified, and work efficiency may be improved.

Hereinafter, the gas removing device 100 of the secondary battery according to the first embodiment of the present invention will be described in detail with reference to the accompanying drawings.

### [Gas removing device of secondary battery according to first embodiment of the present invention]

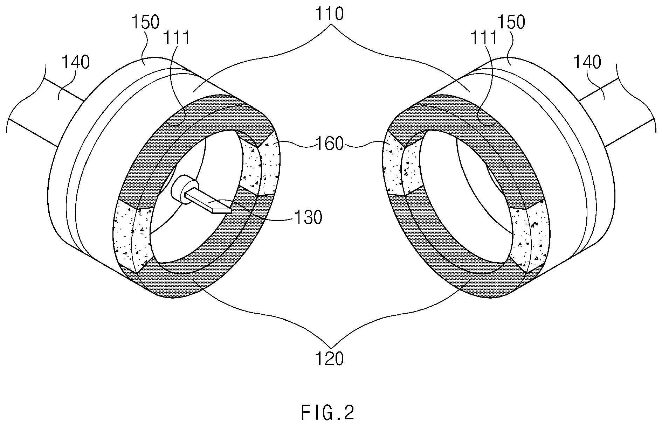

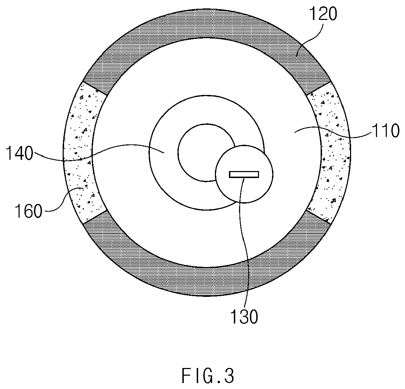

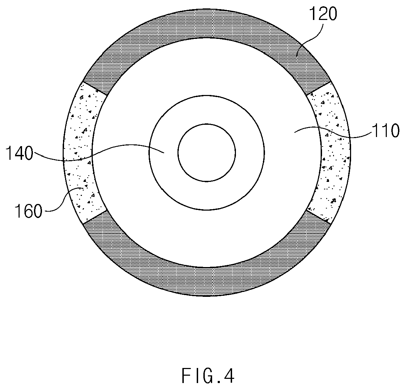

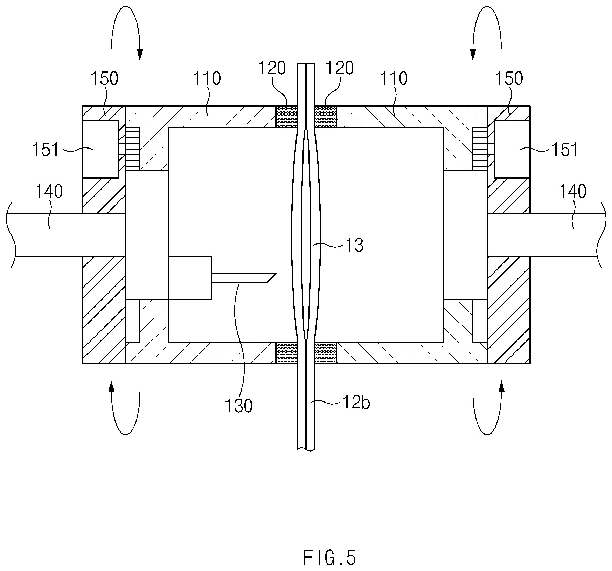

As illustrated in FIGS. 1 to 7, the gas removing device 100 of the secondary battery according to the first embodiment of the present invention may seal a gas, through which a gas is discharged, after the gas generated in a pouch is discharged and comprise a pair of vacuum tubes 110, a heating member 120, a cutting member 130, a gas discharging member 140, and a rotating member 150.

### Pair of vacuum tubes

The pair of vacuum tubes 110 is configured to form a vacuum surface that is in a vacuum state to increase in gas suction power inside the pouch. That is, the pair of vacuum tubes 110 is pressed while being symmetrically disposed on both surfaces of the pouch 12, preferably on both surfaces of the gas pocket part 12b of the pouch 12 to form a vacuum surface 13 that is in a vacuum state in the gas pocket part 12b of the pouch 12 disposed between the pair of vacuum tubes 110.

Hereinafter, for convenience of description, the gas pocket part 12b of the pouch 12 will be referred to as the pouch 12.

Here, the pair of vacuum tubes 110 have the same shape and size and are made of a heat-resistant and insulating material.

Particularly, in the pair of vacuum tubes 110, a pressing surface 111 pressing the pouch 12 to effectively seal an edge of the vacuum surface 13 has a circular ring shape, and also, an accommodation space temporarily accommodating the gas discharged from the pouch is formed at a center of the pressing surface 111, and a cutting member is installed in the accommodation space.

The pair of vacuum tubes 110 having such the structure may stably press both surfaces of the pouch 12, and as a result, the circular vacuum surface 13 may be formed on the surface of the pouch 12.

### Heating member

The heating member 120 is configured to seal the edge of the vacuum surface formed by the pair of vacuum tubes. Particularly, the heating member 120 may seal only a portion of the edge of the vacuum surface 13 before discharging the gas inside the pouch to secure a gas discharge passage through the unsealed portion, and then, after the gas inside the pouch is discharged, the unsealed portion remaining on the edge of the vacuum surface may be sealed to completely finish the gas discharge passage.

That is, the heating member 120 is provided on the pressing surface 111 of the vacuum tube 110 to seal a portion of the edge of the vacuum surface 13 of the pouch 12, which is pressed by the vacuum tube 110, thereby forming a sealed part 12c and an unsealed part 12d on the edge of the vacuum surface 13. That is to say, the edge of the vacuum surface 13 that is in close contact with the heating member 120 is sealed to form the sealed part 12c, and the edge of the vacuum surface 13 that is not in close contact with the heating member 120 is formed as the unsealed part 12d.

Here, two or more heating members 120 are provided on the pressing surface 111 of the vacuum tube 110 to form two or more sealed parts 12c and two or more unsealed parts 12d.

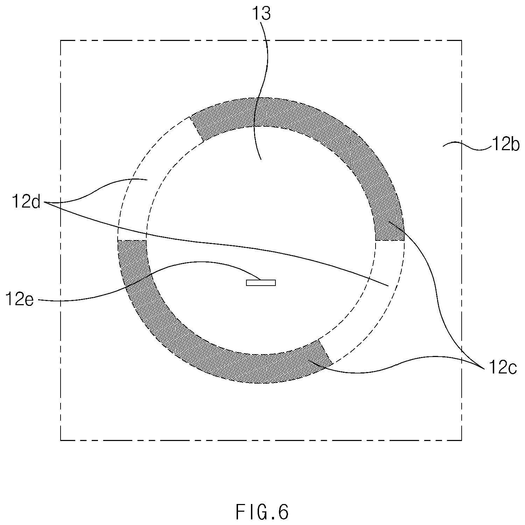

For example, the two heating members 120 are provided on the pressing surface 111 having a ring shape. Here, the two heating members 120 have the same size and shape and are provided symmetrically on both sides of the pressing surface (top and bottom portions of the pressing surface when viewed in FIG. 1) based on a central point of the vacuum tube 110. Referring to FIG. 6, the two heating members 120 having such the structure form a sealed part 12c by sealing each of the upper and lower sides of the edge of the vacuum surface and form the unsealed part 12d at each of lest and right sides of the edge of the vacuum surface.

Here, each of the two heating members 120 has an arc angle of 90° or more, preferably 95° or more based on the central point of the vacuum tube 110.

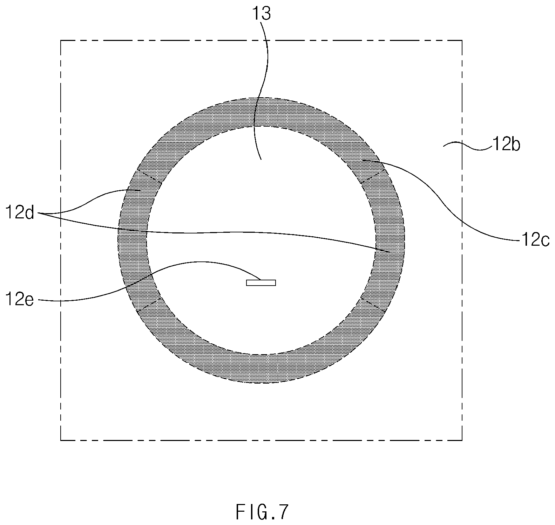

Thereafter, referring to FIG. 7, the two heating members 120 is rotated at an angle of 90° after the gas is discharged to seal the unsealed part of the edge of the vacuum surface. Thus, the vacuum tube may be rotated once to seal the entire edge of the vacuum surface.

Therefore, the heating member 120 may prevent the pouch from being unnecessarily deformed when the gas inside the pouch is discharged through suction force by forming the sealed part on the vacuum surface and may form the unsealed part on the vacuum surface to secure a passage through which the gas inside the pouch is discharged.

The arc angle formed by combining the two or more heating members 120 provided on the pressing surface of the vacuum tube 110 may be 180° or more with respect to the central point of the vacuum tube 110. Thus, it is possible to seal the unsealed part 12d through the two or more heating members 120 only by rotating the vacuum tube 110 once.

Here, when the arc angle formed by combining the two or more heating members 120 is 180° or less with respect to the central point of the vacuum tube 110, the vacuum tube has to be rotated twice or more to seal the entire edge of the vacuum surface, and thus, the work efficiency may be deteriorated.

Preferably, the arc angle formed by combining the two or more heating members 120 may range of 185° to 200° with respect to the central point of the vacuum tube 110, and accordingly, when sealing the edge of the vacuum surface two times, portions may be sealed to overlap each other, thereby significantly preventing sealing failure from occurring. Here, when the arc angle formed by combining the two or more heating members 120 may be 200° or more, the edge of the vacuum surface may be sealed two times, but the overlapping portions may be significantly reduced to deteriorate the work efficiency.

The heat insulator 160 is provided on the pressing surface 111 of the vacuum tube 110 between the two or more heating members 120. The heat insulator 160 may block heat of the heating member 120 so as not to be transferred to the unsealed part 12d, thereby preventing a portion of the unsealed part 12d from being sealed. Particularly, the insulating material 160 is made of a synthetic resin having heat resistance and elasticity to elastically press the unsealed part of the vacuum surface, thereby preventing the unsealed part from being deformed while being excessively inflated during the gas discharge.

The heating member may heat the surface of the pouch at a temperature of 140° to 200° for 0.1 seconds to 1 second under a pressure of 0.1 Mpa to 0.5 MPa.

The heating member 120 may be a heating device that generates heat when power is applied.

### Cutting member

The cutting member 130 is configured to form a cutoff hole for the gas discharge in the vacuum surface. The cutting member 130 is provided inside one vacuum tube 110 of the pair of vacuum tubes 110 and comprises a cutting blade that is withdrawn out to pass through the vacuum surface 13 when the power is applied. The cutting blade returns to its original position when the power is cut off.

That is, the cutting member 130 forms a cutoff hole 12e in the vacuum surface 13 as the cutting blade passes through the vacuum surface 13.

### Gas discharging member

The gas discharging member 140 generates the suction force so that the gas inside the pouch is discharged. As the gas discharging member 140 is mounted on the pair of vacuum tubes 110 to discharge the air inside the vacuum tube 110 to the outside, thereby discharging the gas inside the pouch to the outside through the unsealed part 12d, the cutoff hole 12e, and the inside of the vacuum tube 110 by the suction force generated between the pair of vacuum tubes 110.

### Rotating member

The rotating member 150 is configured to rotate the vacuum tube so as to allow the heating member to seal the unsealed part of the vacuum surface so that the heating member is disposed on the unsealed part of the vacuum surface.

That is, the rotating member 150 comprises a main body to which the vacuum tube is rotatably coupled and a driving motor 151 that rotates the vacuum tube coupled to the main body. Here, the driving motor 151 may be engaged with a gear formed on the vacuum tube 110 to rotate the vacuum tube 110 and thus move the heating member 120 provided on the vacuum tube 110 from the sealed part 12c to the unsealed part 12d.

Thus, in the gas removing device 100 of the secondary battery, which has the above-described configuration, according to the first embodiment of the present invention, the vacuum surface may be formed on the pouch through the pair of vacuum tubes 110, a portion of the vacuum surface may be sealed through the heating member 120 to form the sealed part and the unsealed part, the cutoff hole may be formed in the vacuum surface through the cutting member 130, the gas inside the pouch may be discharged to the outside through the gas discharging member 140, and the heating member 120 may be disposed on the unsealed part through the rotating member 150 to seal the unsealed part and thus seal the cutoff hole.

As a result, the gas removing device 100 of the secondary battery according to the first embodiment of the present invention may discharge the gas inside the pouch and seal the cutoff hole, through which the gas is discharged, thereby the efficiency of the operation and the simplification of the process.

Hereinafter, a gas removing method using the gas removing device 100 of the secondary battery according to the first embodiment of the present invention will be described.

### [Gas removing method of secondary battery according to first embodiment of the present invention]

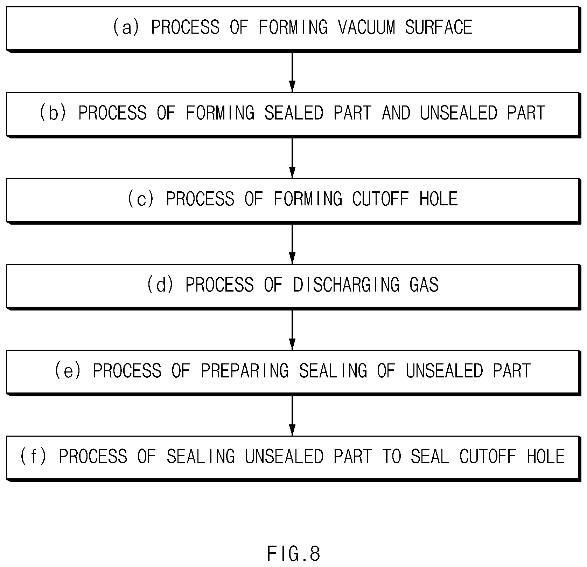

The gas removing method of the secondary battery according to the first embodiment of the present invention is performed to remove the gas generated inside the pouch in which the electrode assembly is accommodated. That is, as illustrated in FIGS. 8 to 13, the gas removing method of the secondary battery according to the first embodiment of the present invention comprises a process (a) of forming a vacuum surface, a process (b) of forming a sealed part and an unsealed part, a process (c) of forming a cutoff hole, a process (d) of discharging a gas, a process (e) of preparing the sealing of the unsealed part, and a process (f) of sealing the cutoff hole to seal the unsealed part.

### Process (a)

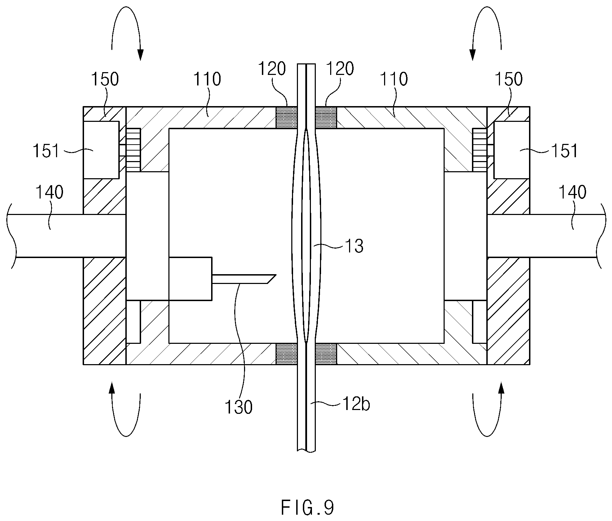

Referring to FIG. 9, the process (a) is performed to form the vacuum surface in a gas pocket part of a pouch. Here, a pair of vacuum tubes 110 are symmetrically disposed on both surfaces of the gas pocket part 12b of the pouch 12, and then, the gas pocket part 12b is pressed. Thus, a vacuum surface 13 that is in a vacuum state may be formed on the gas pocket part 12b disposed between the pair of vacuum tubes 110.

Two or more heating members 120 and two or more heat insulators 160 are alternately provided on the pressing surfaces 111 of the pair of vacuum tubes 110 that press the gas pocket part 12b, and the heating member 120 and the heat insulator 160 are in close contact with the gas pocket part 12b.

### Process (b)

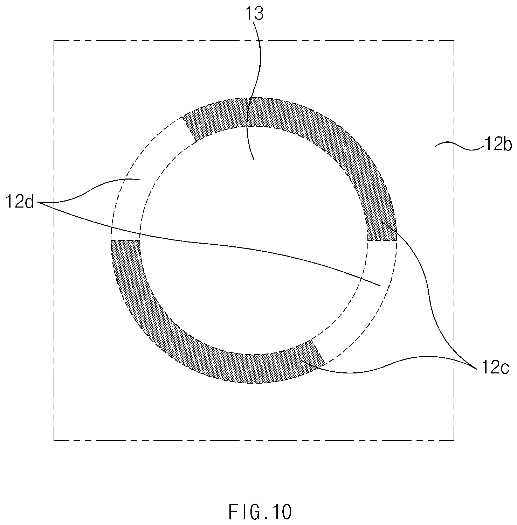

In the process (b), referring to FIG. 10, a portion of an edge of the vacuum surface may be sealed through the heating member 120 provided on the pressing surface of each vacuum tube 110 to form a sealed part 12c and an unsealed part 12d.

That is, in the process (b), two or more sealed parts 12c and two or more unsealed parts 12d are formed on the edge of the vacuum surface 13 through two or more heating members 120 provided on the pressing surface 111 of each vacuum tube 110.

Here, an arc angle formed by combining the two or more heating members may be 180° or more based on a central point of the vacuum tubes, and accordingly, the sealed part having the combined circular arc angle that is 180° or more may be formed on the edge of the vacuum surface 13. The unsealed part has an arc angle excluding the arc angle of the sealed part at an angle of 360°.

### Process (c)

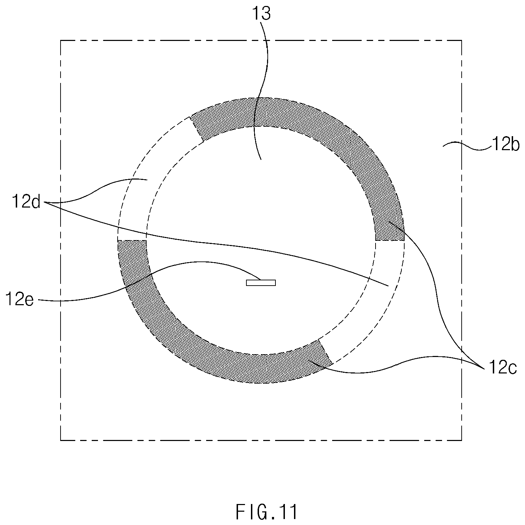

In the process (c), referring to FIG. 11, the vacuum surface 13 is cut through the cutting member 130 provided inside one vacuum tube 110 to form a cutoff hole 12e.

That is, while a cutting blade provided in the cutting member 130 passes through the vacuum surface 13 to form a cutoff hole 12e in the vacuum surface 13. Then, the cutting blade returns to its original position.

### Process (d)

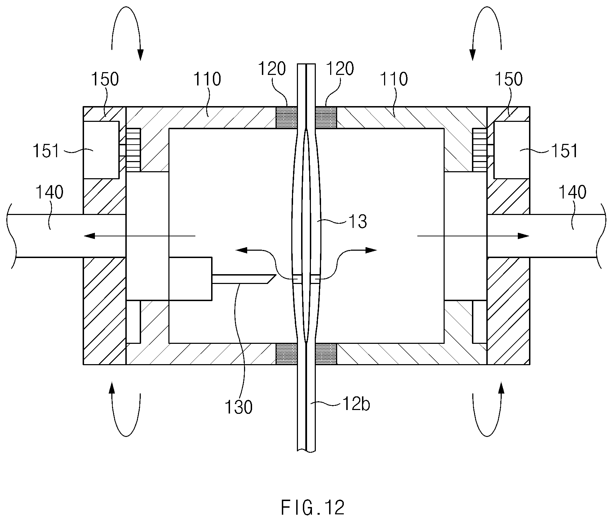

In the process (d), referring to FIG. 12, when air inside the vacuum tubes 110 is discharged through a gas discharging member 140, suction force may be generated inside the vacuum tubes 110, and a gas inside the gas pocket part 12b may be discharged to the outside through the unsealed part 12d, the cutoff hole 12e, and the inside of the vacuum tubes 110.

### Process (e)

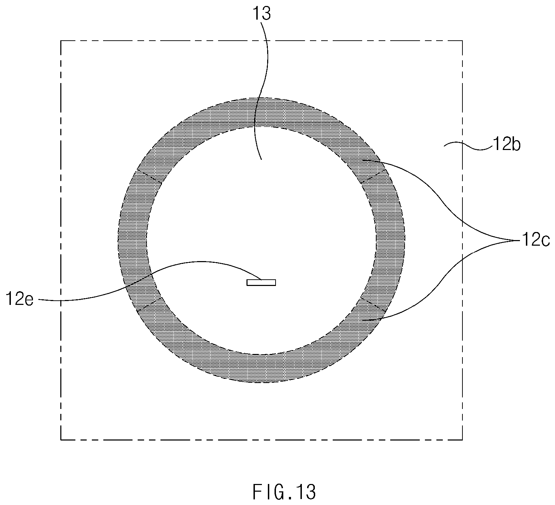

In the process (e), referring to FIG. 13, the pair of vacuum tubes 110 that are in close contact with the pouch 12 are simultaneously rotated through a rotating member 150. Then, the heating member 120 may be rotated by being interlocked with the vacuum tubes 110, and accordingly, the heating member 120 may be disposed on the unsealed part 12d of an edge of the vacuum surface 13.

In the process (e), the rotating member 150 rotates the vacuum tubes at an angle of 90° to locate the heating member on the unsealed part. Here, both ends of the heating member are disposed to partially overlap the sealed part disposed on each of both sides of the unsealed part.

### Process (f)

In the process (f), the unsealed part 12d is sealed through the heating member 120. Thus, the entire edge of the vacuum surface 13 may be sealed to seal the cutoff hole 12e.

Therefore, in the gas removing method of the secondary battery according to the first embodiment of the present invention, when the process (f) is completed, the gas generated inside the pouch may be completely discharged.

Hereinafter, in descriptions of another embodiment of the present invention, constituents having the same function as the above-mentioned embodiment have been given the same reference numeral in the drawings, and thus duplicated description will be omitted.

### [Gas removing device of secondary battery according to second embodiment of the present invention]

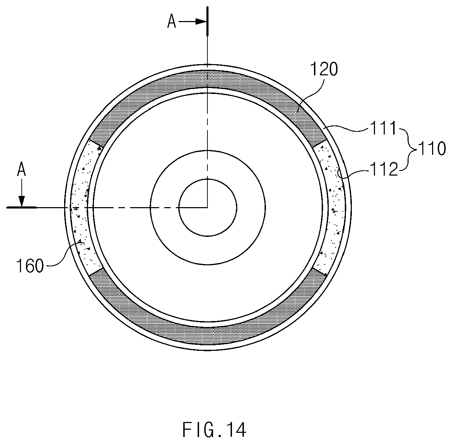

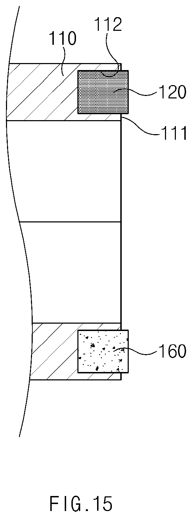

As illustrated in FIGS. 14 and 15, a gas removing device 100 of a secondary battery according to a second embodiment of the present invention comprises a vacuum tube 110, a heating member 120 provided on a pressing surface of the vacuum tube 110, and a heat insulator 160.

Here, an insertion groove 112 is formed in the pressing surface 111 of the vacuum tube 110, and the heating member 120 and the heat insulator 160 are inserted into the insertion groove 112. Thus, fixing force between the heating member 120 and the heat insulator 160 may greatly increase.

Each of the heating member 120 and the heat insulator 160 may have the same height as the pressing surface 111. Thus, it is possible to stably protect the heating member 120 and the heat insulator 160 from the outside.

In addition, the heating member 120 and the heat insulator 160 may be provided to protrude by a predetermined height from the pressing surface 111. Thus, the heating member 120 and the heat insulator 160 may be stably attached to the edge of the vacuum surface.

The insertion groove 112 has a ring-shaped structure in which both ends are connected while being formed along the ring-shaped pressing surface 111, and two or more heating members 120 and two or more insulators 160 are alternately inserted. Thus, the two or more heating members 120 and the two or more heat insulators 160 may be easily inserted, and their positions may be selectively adjusted.

The heating member 120 and the heat insulator 160 may be detachably inserted into the insertion groove 112 to improve the ease of maintenance.

Accordingly, the scope of the present invention is defined by the appended claims.

### [Description of the Symbols]

10: Secondary battery
11: Electrode assembly
12: Pouch
12a: Accommodation part
12b: Gas pocket part
12c: Sealing part
12d: Unsealed part
12e: Cutoff hole
13: Vacuum surface
100: Gas removing device of secondary battery
110: Vacuum tube
111: Pressing surface
112: Insertion groove
120: Heating member
130: Cutting member
140: Gas discharging member
150: Rotating member
151: Driving motor
160: Insulator

## Claims

1. A gas removing device (100), adapted to remove a gas generated inside a pouch (12), in which an electrode assembly (11) is accommodated, the gas removing device comprising (100):
a pair of vacuum tubes (110) configured to press each of both surfaces of the pouch (12) in a state of being symmetrically disposed on both the surfaces of the pouch (12) so as to form a vacuum surface (13), which is adapted to be in a vacuum state, on the pouch (12);
a heating member (120) provided on a pressing surface (111) of each of the vacuum tubes (110), which presses the pouch (12), and configured to seal only a portion of an edge of the vacuum surface (13) so as to form a sealed part (12c) and an unsealed part (12d);
a cutting member (130) configured to cut the vacuum surface (13) of the pouch (12) so as to form a cutoff hole (12e); and
a gas discharging member (140) configured to discharge a gas inside the pouch (12) to the outside through the unsealed part (12d), the cutoff hole (12e), and the vacuum tubes (110),
wherein two or more heating members (120) are provided on the pressing surface (111) of each one of the pair of vacuum tubes (110) to form two or more sealed parts (12c) and two or more unsealed parts (12d) on the edge of the vacuum surface (13),
wherein an insulator (160) configured to block heat of the heating member (120) so as not to be transferred to the unsealed part (12d) is provided on the pressing surface (111) of each vacuum tube (110) disposed between the heating members (120).

2. The gas removing device (100) of claim 1, wherein an arc angle formed by combining the two or more heating members (120) is 180° or more based a central point of the vacuum tubes (110).

3. The gas removing device (100) of claim 1, wherein two heating members (120) are symmetrically provided on the pressing surface (111) based on a central point of the vacuum tubes (110), and
each of the two heating members (120) has an arc angle of 90° or more based on the central point of the vacuum tubes (110).

4. The gas removing device (100) of claim 1, wherein an insertion groove (112) into which the heating member (120) and the insulator (160) are inserted and fixed is formed in the pressing surface (111) of the vacuum tubes (110).

5. The gas removing device (100) of claim **4,** wherein the pressing surface (111) of the vacuum tubes (110) has a ring shape,
the insertion groove (112) is formed along the pressing surface (111) so that each of both ends of the insertion groove (112) has a right shape, and
the heating member (120) and the insulator (160) are inserted to be alternately disposed in the insertion groove (112) having the ring shape.

6. The gas removing device (100) of claim 5, wherein the heating member (120) and the insulator (160) are detachably inserted into the insertion groove (112).

7. The gas removing device (100) of claim 1, further comprising a rotating member (150) configured to rotate the pair of vacuum tubes (110) so that the heating member (120) provided in each of the pair of vacuum tubes (110) is disposed on the unsealed part (12d).

8. The gas removing device (100) of claim 7, wherein the heating member (120) disposed on the unsealed part (12d) is provided to seal the unsealed part (12d) so as to seal the cutoff hole (12e).

9. A gas removing method of a secondary battery, in which a gas generated inside a pouch (12), in which an electrode assembly (11) is accommodated, is removed, the gas removing method comprising, in the following order:
a process (a) of pressing each of both surfaces of the pouch (12) by a pair of vacuum tubes (110) in a state of being symmetrically disposed on both the surfaces of the pouch (12) to form a vacuum surface (13), which is in a vacuum state, on a surface of the pouch (12);
a process (b) of sealing only a portion of an edge of the vacuum surface (13) through a heating member (120) provided on a pressing surface (111) of each vacuum tube (110) that presses the pouch (12) to form a sealed part (12c) and an unsealed part (12d)
a process (c) of cutting the vacuum surface (13) of the pouch (12) by using a cutting member (130) to form a cutoff hole (12e); and
a process (d) of discharging a gas inside the pouch (12) through a gas discharging member (140) to the outside through the unsealed part (12d), the cutoff hole (12e), and the vacuum tubes (110),
wherein, in the process (b), two or more heating members (120) are provided to form two or more sealed parts (12c) and two or more unsealed parts (12d) on the edge of the vacuum surface (13), and
wherein an insulator (160) configured to block heat of the heating member (120) so as not to be transferred to the unsealed part (12d) is provided on the pressing surface (111) of each vacuum tube (110) disposed between the heating members (120).

10. The gas removing method of claim 9, wherein, in the process (b), an arc angle formed by combining the two or more heating members (120) is 180° or more based a central point of the vacuum tubes (110) to form a sealed part (12c) having a combined arc angle of 180° or more on the edge of the vacuum surface (13).

11. The gas removing method of claim 9, further comprising, after the process (d), a process (e) of rotating the vacuum tubes (110) through a rotating member (150) so that the heating member (120) provided on each vacuum tube (110) is disposed on the unsealed part (12d); and
a process (f) of sealing the unsealed part (12d) through the heating member (120) to seal the cutoff hole (12e).

12. The gas removing method of claim 11, wherein, in the process (e), both ends of the heating member (120) disposed on the unsealed part (12d) are disposed to partially overlap the sealed part (12c) disposed on each of both sides of the unsealed part (12d).

## Patentansprüche

1. Gasentfernungsvorrichtung (100), die dazu ausgelegt ist, ein im Inneren eines Beutels (12) erzeugtes Gas zu entfernen, in dem eine Elektrodenanordnung (11) untergebracht ist, wobei die Gasentfernungsvorrichtung (100) umfasst:
ein Paar Vakuumröhren (110), die konfiguriert sind, um auf jede der beiden Oberflächen des Beutels (12) in einem Zustand zu pressen, in dem sie symmetrisch auf den beiden Oberflächen des Beutels (12) angeordnet sind, um so eine Vakuumfläche (13) zu bilden, die dazu ausgelegt ist, sich in einem Vakuumzustand zu befinden, auf dem Beutel (12);
ein Heizelement (120), das auf einer Pressfläche (111) jeder der Vakuumröhren (110) vorgesehen ist, das auf den Beutel (12) presst, und das konfiguriert ist, um nur einen Teil eines Randes der Vakuumfläche (13) zu versiegeln, um so einen versiegelten Teil (12c) und einen unversiegelten Teil (12d) zu bilden;
ein Schneidelement (130), das konfiguriert ist, um die Vakuumfläche (13) des Beutels (12) zu schneiden, um so ein Ausschnittloch (12e) zu bilden; und
ein Gasablasseelement (140), das konfiguriert ist, um ein Gas im Inneren des Beutels (12) durch den unversiegelten Teil (12d), das Ausschnittloch (12e) und die Vakuumröhren (110) nach außen abzulassen,
wobei zwei oder mehr Heizelemente (120) auf der Pressfläche (111) von jeder des Paares von Vakuumröhren (110) vorgesehen sind, um zwei oder mehr versiegelte Teile (12c) und zwei oder mehr unversiegelte Teile (12d) am Rand der Vakuumfläche (13) zu bilden,
wobei ein Isolator (160), der konfiguriert ist, um die Wärme des Heizelements (120) zu blockieren, damit sie nicht auf den unversiegelten Teil (12d) übertragen wird, auf der Pressfläche (111) jeder Vakuumröhre (110) zwischen den Heizelementen (120) angeordnet ist.

2. Gasentfernungsvorrichtung (100) nach Anspruch 1, wobei ein Bogenwinkel, der durch die Kombination der zwei oder mehr Heizelemente (120) gebildet wird, 180^{°} oder mehr beträgt, basierend auf einem Mittelpunkt der Vakuumröhren (110).

3. Gasentfernungsvorrichtung (100) nach Anspruch 1, wobei zwei Heizelemente (120) symmetrisch auf der Pressfläche (111) basierend auf einem Mittelpunkt der Vakuumröhren (110) vorgesehen sind, und
jedes der beiden Heizelemente (120) einen Bogenwinkel von 90^{°} oder mehr aufweist, basierend auf dem Mittelpunkt der Vakuumröhren (110).

4. Gasentfernungsvorrichtung (100) nach Anspruch 1, wobei eine Einführungsnut (112), in die das Heizelement (120) und der Isolator (160) eingesetzt und befestigt sind, in der Pressfläche (111) der Vakuumröhren (110) ausgebildet ist.

5. Gasentfernungsvorrichtung (100) nach Anspruch 4, wobei die Pressfläche (111) der Vakuumröhren (110) eine Ringform aufweist,
die Einführungsnut (112) entlang der Pressfläche (111) so ausgebildet ist, dass jedes der beiden Enden der Einführungsnut (112) eine rechte Form aufweist, und
das Heizelement (120) und der Isolator (160) so eingesetzt sind, dass sie abwechselnd in der Einführungsnut (112) mit der Ringform angeordnet sind.

6. Gasentfernungsvorrichtung (100) nach Anspruch 5, wobei das Heizelement (120) und der Isolator (160) lösbar in die Einführungsnut (112) eingesetzt sind.

7. Gasentfernungsvorrichtung (100) nach Anspruch 1, ferner umfassend ein Drehelement (150), das konfiguriert ist, um das Paar Vakuumröhren (110) so zu drehen, dass das in jeder des Paares von Vakuumröhren (110) vorgesehene Heizelement (120) auf dem unversiegelten Teil (12d) angeordnet ist.

8. Gasentfernungsvorrichtung (100) nach Anspruch 7, wobei das auf dem unversiegelten Teil (12d) angeordnete Heizelement (120) vorgesehen ist, um den unversiegelten Teil (12d) zu versiegeln, um so das Ausschnittloch (12e) zu versiegeln.

9. Gasentfernungsverfahren einer Sekundärbatterie, bei dem ein im Inneren eines Beutels (12), in dem eine Elektrodenanordnung (11) untergebracht ist, erzeugtes Gas entfernt wird, wobei das Gasentfernungsverfahren in der folgenden Reihenfolge umfasst:
einen Verfahrensschritt (a) des Pressens jeder der beiden Oberflächen des Beutels (12) durch ein Paar Vakuumröhren (110) in einem Zustand, in dem sie symmetrisch auf den beiden Oberflächen des Beutels (12) angeordnet sind, um eine Vakuumfläche (13) zu bilden, die sich in einem Vakuumzustand befindet, auf einer Oberfläche des Beutels (12);
einen Verfahrensschritt (b) des Versiegelns nur eines Teils eines Randes der Vakuumfläche (13) durch ein Heizelement (120), das auf einer Pressfläche (111) jeder Vakuumröhre (110), die auf den Beutel (12) presst, vorgesehen ist, um einen versiegelten Teil (12c) und einen unversiegelten Teil (12d) zu bilden
einen Verfahrensschritt (c) des Schneidens der Vakuumfläche (13) des Beutels (12) unter Verwendung eines Schneidelements (130), um ein Ausschnittloch (12e) zu bilden; und
einen Verfahrensschritt (d) des Ablassens eines Gases im Inneren des Beutels (12) durch ein Gasablasseelement (140) nach außen durch den unversiegelten Teil (12d), das Ausschnittloch (12e) und die Vakuumröhren (110),
wobei im Verfahrensschritt (b) zwei oder mehr Heizelemente (120) vorgesehen sind, um zwei oder mehr versiegelte Teile (12c) und zwei oder mehr unversiegelte Teile (12d) am Rand der Vakuumfläche (13) zu bilden, und
wobei ein Isolator (160), der konfiguriert ist, um die Wärme des Heizelements (120) zu blockieren, damit sie nicht auf den unversiegelten Teil (12d) übertragen wird, auf den Pressflächen (111) jeder Vakuumröhre (110) zwischen den Heizelementen (120) angeordnet ist.

10. Gasentfernungsverfahren nach Anspruch 9, wobei im Verfahrensschritt (b) ein Bogenwinkel, der durch die Kombination der zwei oder mehr Heizelemente (120) gebildet wird, 180^{°} oder mehr beträgt, basierend auf einem Mittelpunkt der Vakuumröhren (110), um einen versiegelten Teil (12c) mit einem kombinierten Bogenwinkel von 180^{°} oder mehr am Rand der Vakuumfläche (13) zu bilden.

11. Gasentfernungsverfahren nach Anspruch 9, ferner umfassend, nach dem Verfahrensschritt (d), einen Verfahrensschritt (e) des Drehens der Vakuumröhren (110) durch ein Drehelement (150), so dass das auf jeder Vakuumröhre (110) vorgesehene Heizelement (120) auf dem unversiegelten Teil (12d) angeordnet wird; und
einen Verfahrensschritt (f) des Versiegelns des unversiegelten Teils (12d) durch das Heizelement (120), um das Ausschnittloch (12e) zu versiegeln.

12. Gasentfernungsverfahren nach Anspruch 11, wobei im Verfahrensschritt (e) beide Enden des auf dem unversiegelten Teil (12d) angeordneten Heizelements (120) so angeordnet sind, dass sie den versiegelten Teil (12c), der auf jeder der beiden Seiten des unversiegelten Teils (12d) angeordnet ist, teilweise überlappen.

## Revendications

1. Dispositif d'élimination de gaz (100), adapté pour éliminer un gaz généré à l'intérieur d'une poche (12), dans laquelle un ensemble d'électrodes (11) est logé, le dispositif d'élimination de gaz comprenant (100) :
une paire de tubes à vide (110) configurés pour presser chacune des deux surfaces de la poche (12) dans un état où ils sont disposés symétriquement sur les deux surfaces de la poche (12) de manière à former une surface de vide (13), qui est adaptée pour être dans un état de vide, sur la poche (12) ;
un élément chauffant (120) prévu sur une surface de pression (111) de chacun des tubes à vide (110), qui presse la poche (12), et configuré pour ne sceller qu'une partie d'un bord de la surface de vide (13) de manière à former une partie scellée (12c) et une partie non scellée (12d) ;
un élément de coupe (130) configuré pour couper la surface de vide (13) de la poche (12) de manière à former un trou de découpe (12e) ; et
un élément d'évacuation de gaz (140) configuré pour évacuer un gaz à l'intérieur de la poche (12) vers l'extérieur à travers la partie non scellée (12d), le trou de découpe (12e), et les tubes à vide (110),
dans lequel deux éléments chauffants (120) ou plus sont disposés sur la surface de pression (111) de chacun de la paire de tubes à vide (110) pour former deux parties scellées (12c) ou plus et deux parties non scellées (12d) ou plus sur le bord de la surface de vide (13),
dans lequel un isolant (160) configuré pour bloquer la chaleur de l'élément chauffant (120) afin qu'elle ne soit pas transférée à la partie non scellée (12d) est disposé sur la surface de pression (111) de chaque tube à vide (110) disposé entre les éléments chauffants (120).

2. Dispositif d'élimination de gaz (100) selon la revendication 1, dans lequel un angle d'arc formé en combinant les deux éléments chauffants (120) ou plus est de 180^{°} ou plus sur la base d'un point central des tubes à vide (110).

3. Dispositif d'élimination de gaz (100) selon la revendication 1, dans lequel deux éléments chauffants (120) sont disposés symétriquement sur la surface de pression (111) sur la base d'un point central des tubes à vide (110), et
chacun des deux éléments chauffants (120) a un angle d'arc de 90^{°} ou plus sur la base du point central des tubes à vide (110).

4. Dispositif d'élimination de gaz (100) selon la revendication 1, dans lequel une rainure d'insertion (112) dans laquelle l'élément chauffant (120) et l'isolant (160) sont insérés et fixés est formée dans la surface de pression (111) des tubes à vide (110).

5. Dispositif d'élimination de gaz (100) selon la revendication 4, dans lequel la surface de pression (111) des tubes à vide (110) a une forme annulaire,
la rainure d'insertion (112) est formée le long de la surface de pression (111) de sorte que chacune des deux extrémités de la rainure d'insertion (112) a une forme droite, et
l'élément chauffant (120) et l'isolant (160) sont insérés pour être disposés en alternance dans la rainure d'insertion (112) ayant la forme annulaire.

6. Dispositif d'élimination de gaz (100) selon la revendication 5, dans lequel l'élément chauffant (120) et l'isolant (160) sont insérés de manière amovible dans la rainure d'insertion (112).

7. Dispositif d'élimination de gaz (100) selon la revendication 1, comprenant en outre un élément rotatif (150) configuré pour faire tourner la paire de tubes à vide (110) de sorte que l'élément chauffant (120) prévu dans chacune de la paire de tubes à vide (110) est disposé sur la partie non scellée (12d).

8. Dispositif d'élimination de gaz (100) selon la revendication 7, dans lequel l'élément chauffant (120) disposé sur la partie non scellée (12d) est disposé pour sceller la partie non scellée (12d) de manière à sceller le trou de découpe (12e).

9. Procédé d'élimination de gaz d'une batterie secondaire, dans lequel un gaz généré à l'intérieur d'une poche (12), dans laquelle un ensemble d'électrodes (11) est logé, est éliminé, le procédé d'élimination de gaz comprenant, dans l'ordre suivant :
une étape (a) de presser chacune des deux surfaces de la poche (12) par une paire de tubes à vide (110) dans un état où ils sont disposés symétriquement sur les deux surfaces de la poche (12) pour former une surface de vide (13), qui est dans un état de vide, sur une surface de la poche (12) ;
une étape (b) de sceller seulement une partie d'un bord de la surface de vide (13) par l'intermédiaire d'un élément chauffant (120) disposé sur une surface de pression (111) de chaque tube à vide (110) qui presse la poche (12) pour former une partie scellée (12c) et une partie non scellée (12d)
une étape (c) de couper la surface de vide (13) de la poche (12) en utilisant un élément de coupe (130) pour former un trou de découpe (12e) ; et
une étape (d) d' évacuer un gaz à l'intérieur de la poche (12) par l'intermédiaire d'un élément d'évacuation de gaz (140) vers l'extérieur à travers la partie non scellée (12d), le trou de découpe (12e) et les tubes à vide (110),
dans lequel, dans l'étape (b), deux éléments chauffants (120) ou plus sont disposés pour former deux parties scellées (12c) ou plus et deux parties non scellées (12d) ou plus sur le bord de la surface de vide (13), et
dans lequel un isolant (160) configuré pour bloquer la chaleur de l'élément chauffant (120) afin qu'elle ne soit pas transférée à la partie non scellée (12d) est disposé sur les surfaces de pression (111) de chaque tube à vide (110) disposé entre les éléments chauffants (120).

10. Procédé d'élimination de gaz selon la revendication 9, dans lequel, dans l'étape (b), un angle d'arc formé en combinant les deux ou plus éléments chauffants (120) est de 180^{°} ou plus sur la base d'un point central des tubes à vide (110) pour former une partie scellée (12c) ayant un angle d'arc combiné de 180^{°} ou plus sur le bord de la surface de vide (13).

11. Procédé d'élimination de gaz selon la revendication 9, comprenant en outre, après l'étape (d), une étape (e) de faire tourner les tubes à vide (110) par l'intermédiaire d'un élément rotatif (150) de sorte que l'élément chauffant (120) disposé sur chaque tube à vide (110) est disposé sur la partie non scellée (12d) ; et
une étape (f) de sceller la partie non scellée (12d) par l'intermédiaire de l'élément chauffant (120) pour sceller le trou de découpe (12e).

12. Procédé d'élimination de gaz selon la revendication 11, dans lequel, dans l'étape (e), les deux extrémités de l'élément chauffant (120) disposé sur la partie non scellée (12d) sont disposées de manière à chevaucher partiellement la partie scellée (12c) disposée sur chacun des deux côtés de la partie non scellée (12d).
